# EUROPEAN PATENT APPLICATION

(11) **EP 1 170 177 A1**
(43) Date of publication of application: **09.01.2002**
(21) Application number: 00670006.6
(22) Date of filing: 06.07.2000
(51) Int. Cl.: B60R 7/04, B60N 2/46

(54) **Central console for a motor vehicle**

(71) Applicant: Plasfil - Plasticos da Figueira, Lda., 3081-852 Figueira da Foz Codex (PT)
(72) Inventor: Da Silva, José Guedes, 3080-189 Figueira da Foz (PT)
(74) Representative: Pereira da Cruz, Joao

(57) **Abstract**

This invention relates to a central console for motor vehicles, more specifically a console positioned on the floor of the motor vehicle between the driver's seat and the passenger's seat, which can move longitudinally, irrespective of whether it is positioned at the front or the back part of the front of the vehicle. It is essentially characterised in that it consists of a body (2) with a flat and horizontal upper part (3) and an oblique lower part (4), which can move along a path in which at least the front part is on an inclined plane, making it possible, throughout this movement, to chose the most suitable and comfortable position as an armrest or as a working position for a particular accessory.

## Description

### Scope of the invention

This invention relates to a central console for motor vehicles, more specifically a console positioned on the floor of the motor vehicle between the driver's seat and the passenger's seat, which can move longitudinally, irrespective of whether it is situated at the front or the back part of the front of the vehicle.

### Background to the invention

Various types of consoles are known which equip many models of motor vehicles. It is even desirable for this type of console to have compartments for storing all kinds of personal items and also compartments which act as receptacles for holding other accessories which are now commonplace in most motor vehicles, such as radios, CD players, sound recorders/players, ashtrays and the like. Recently, consoles have been used to attach various types of portable computers with the respective monitors, GPS (General Positioning System) monitors, telephones, etc.

The consoles that are currently available are also designed to act as an armrest.

Patent US 5,823,599 describes a central console fixed to the floor of the motor vehicle with interchangeable module receptacles, also including a rotating drum housing various modules for storing objects, which modules can be duly selected.

Patent US 3,926,473 relates to a central console which acts as an adjustable armrest where a section of the armrest is connected or hinged to each side of the armrest in order to permit transverse arcuate movement with transverse adjustability.

Patent US 6,003,927 describes a central console which acts as an armrest for the driver and/or passenger, said console having longitudinal, transverse and vertical movement in order to adjust the console to the position selected by the user.

These and many other central consoles use different mechanisms for adjusting them to certain positions chosen by users. They are generally complex mechanisms in view of both the number of parts that they use and the movements they make.

It was therefore important to design a central console which would allow the occupants of motor vehicles to select their preferred position in order for the console to act as an effective armrest, using a very simple and highly reliable system.

### Summary of the invention

The console described in this invention, which is intended to be assembled inside a motor vehicle between the driver's seat and the passenger's seat, is characterised essentially in that it has longitudinal movement, which displaces the console along the central area of the motor vehicle, irrespective of whether it is situated at the front or the back part of the centre of the vehicle. This means that when the console moves within the front part of the motor vehicle, it can be adjusted to positions which are suitable for resting the arms and when it moves within the back part of the motor vehicle, it can be placed in the most appropriate position for the function which it is intended to carry out.

Another objective of the invention is to allow the console to move along an inclined plane so that as it moves across the vehicle in a longitudinal direction, it is gradually raised.

Another objective of the invention is to permit movement using mechanical or electrical means.

Another objective of the invention is to allow each of the positions of the console to be memorised using appropriate means, in order allow it to be put back in the desired position by different users.

Another objective of the invention is to allow the movement of the console to be controlled by control means installed in the body of the console itself.

Another objective of the invention is to make it possible to lock the console in any of the chosen positions, for which purpose it is equipped with the necessary means.

Another objective of the invention is to provide a console which acts as an armrest as well as having the normal functions of a console, i.e. having compartments for storing all kinds of personal items and compartments which act as receptacles for holding other accessories, such as radios, CD players, sound recorders/players, ashtrays and the like, and allowing other types of equipment to be coupled and assembled, namely portable computers with the respective monitors, GPS (General Positioning System) monitors, telephones, etc.

These and other objectives will become obvious from the following description.

### Brief description of the drawings

The following description makes reference to the drawings which are attached hereto for exemplifying and non-restrictive purposes. In the drawings:
Figure 1 is a perspective view of a preferred embodiment of the console according to the invention positioned on the floor of the motor vehicle;

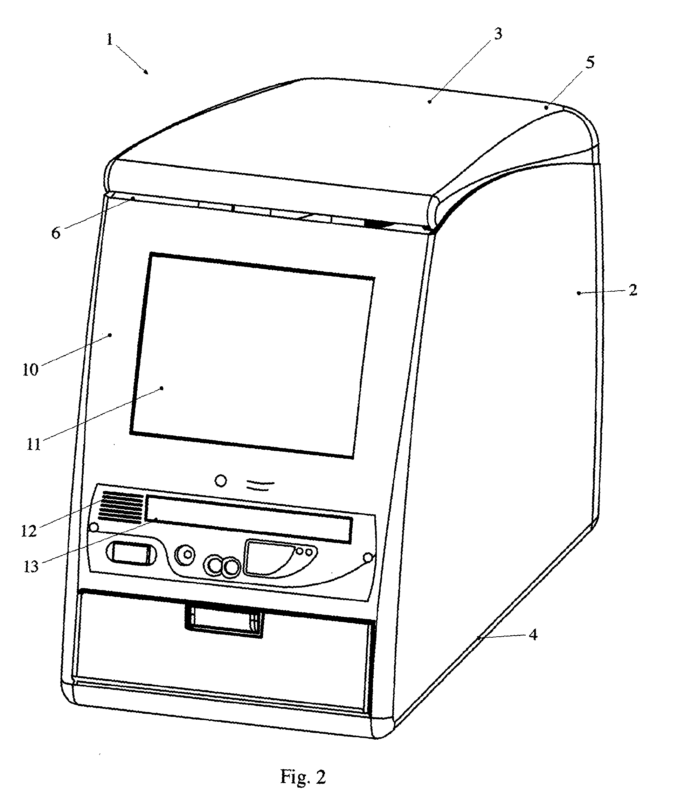

Figure 2 is a perspective view of the console according to the invention;
Figure 3 is a another perspective view of the console with the door of the upper part open;
Figure 4 is a side view of the console according to the invention; and
Figure 5 shows another preferred embodiment of the invention.

### Detailed description of the preferred embodiments

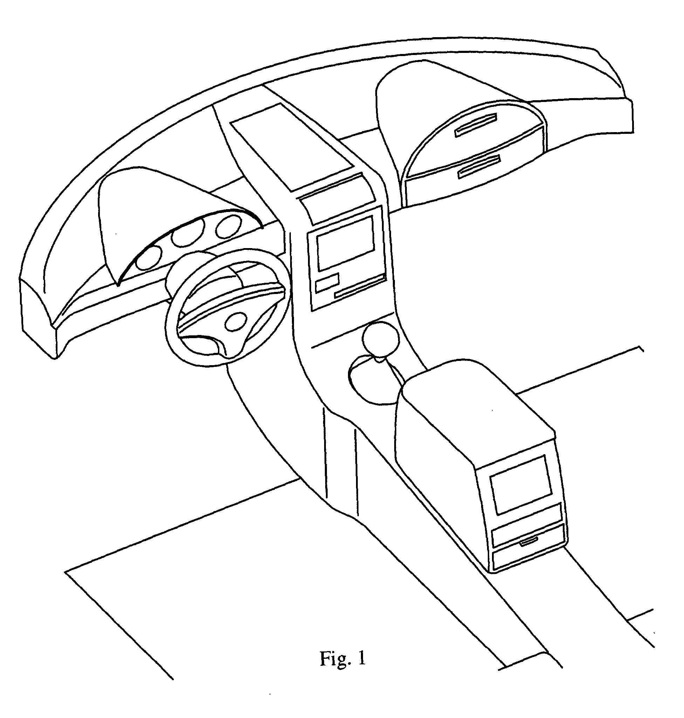

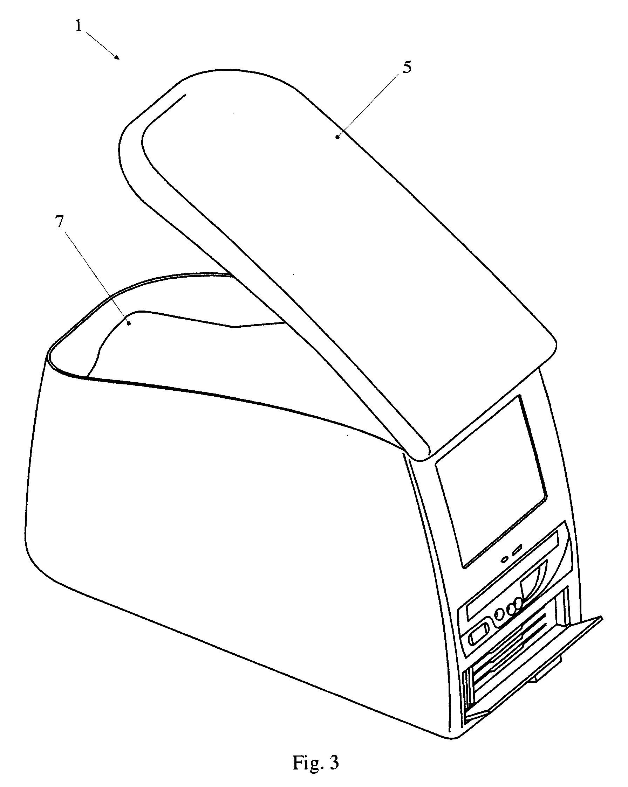

As can be seen in figures 1 and 3, the console (1) consists essentially of a body (2) which has as its fundamental characteristics a flat and horizontal upper part (3) and an oblique (4) lower part. The upper part of the console is equipped with a hinged door (5) at the back (6) of the console (1) which, when opened, gives access to an inside compartment (7) where various personal items can be stored and, for example, the keyboard of a personal computer resting on appropriate supports (8 and 9). At the back of the console (10), a monitor (11), a portable computer (12) and disc drives (13) are assembled.

The whole console (1) moves on a guiding device (14) along the inclined plane (15) mounted on a carriage (16) and the movement is guaranteed by an electric motor or simply by mechanical means, which are not represented. The console (1) can be locked in any of the selected positions by a fastening mechanism, which is likewise not represented, and each of the positions can be memorised by the computer itself or by means suitable for this purpose.

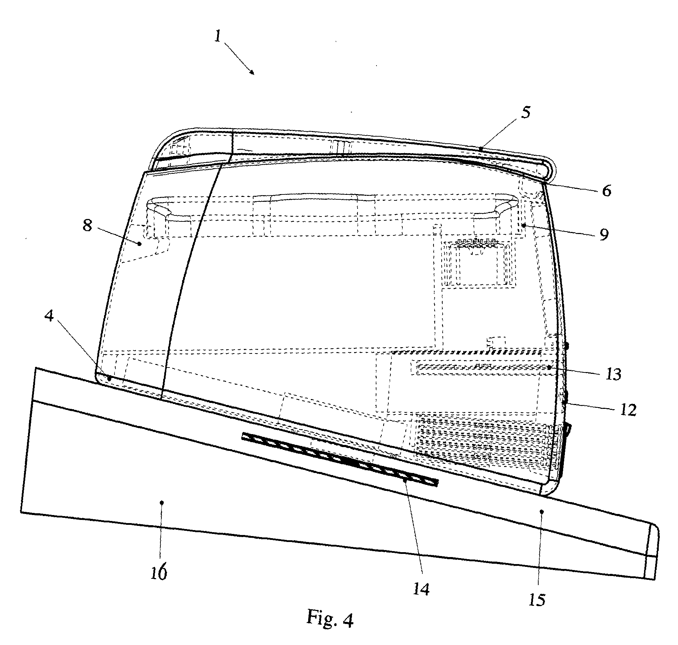

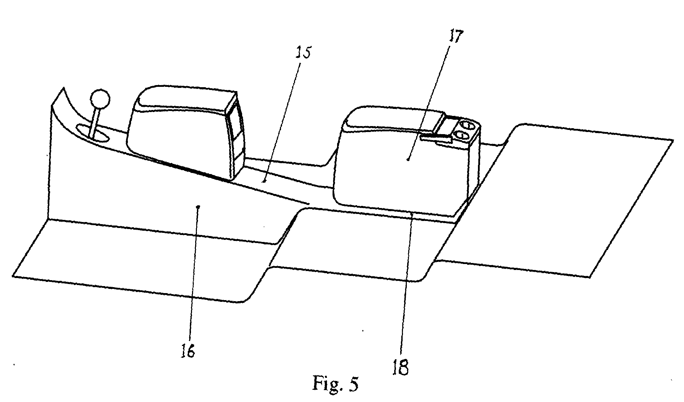

As can be seen in figure 5, which shows another preferred embodiment of the invention, in the central part of the floor of the motor vehicle there are two consoles, one for the back part and the other for the front part. The console of the front part of the vehicle has all the characteristics mentioned for the embodiment described in figures 1 and 4. The console (17) of the back part of the vehicle can also move along both the horizontal part (18) and the inclined part (15) of the carriage (16). The movement, fastening and memorising mechanisms are or can be the same as the ones that were previously described. The console (17) also has a hinged door (5) which gives access to the inside compartment (7), as well as compartments (19) for other specific purposes.

As will be obvious to persons skilled in the art, various modifications can be made to the embodiments described. For example, it is possible to equip the console (1) with other accessories, such as radios, CD players, recorders, telephones, controls for each of these accessories or controls for particular functions of the motor vehicle itself, or simply other types of compartments, such as compartments for ashtrays, glasses, bottles, etc. Likewise, the console (17) can have various types of accessories or any type of compartment.

All these variations must be considered within the scope of the invention, which must be considered as being limited only by the spirit of the following claims.

## Claims

1. Central console (1) for a motor vehicle to be positioned on the floor between the driver's seat and the passenger's seat, being of the type that consists of various types of accessories and compartments, which also acts as an armrest for the passenger and can move along the longitudinal axis of the motor vehicle, **characterised in that** it consists of a body (2) with a flat and horizontal upper part (3) and an oblique lower part (4), which can move along a path in which at least the front part is on an inclined plane, making it possible, throughout this movement, to chose the most suitable and comfortable position as an armrest or as a working position for a particular accessory.

2. Central console for a motor vehicle, according to the previous claim, **characterised in that** it moves along the carriage (16) on a guiding device (14), allowing the console to slide into the desired position.

3. Central console for a motor vehicle, according to the previous claims, **characterised in that** the movement of the console can be activated mechanically or electrically using suitable mechanisms.

4. Central console for a motor vehicle, according to the previous claim, **characterised in that** it can be locked into the positions chosen by the user using suitable mechanisms.

5. Central console for a motor vehicle, according to the previous claims, **characterised in that** it each of the chosen positions can be memorised using appropriate means.
